(19) Europäisches Patentamt
European Patent Office
Office européen des brevets

(11) **EP 2 753 491 B1**

(12) **FASCICULE DE BREVET EUROPEEN**

(45) Date de publication et mention de la délivrance du brevet:
**14.10.2015 Bulletin 2015/42**

(21) Numéro de dépôt: **12767030.5**

(22) Date de dépôt: **06.09.2012**

(51) Int Cl.:
***B60L 11/18*** (2006.01)   ***H02J 7/00*** (2006.01)

(86) Numéro de dépôt international:
**PCT/FR2012/051989**

(87) Numéro de publication internationale:
**WO 2013/034853 (14.03.2013 Gazette 2013/11)**

(54) **PROCÉDÉ ET DISPOSITIF DE RECHARGE OPTIMISÉE DE BATTERIE ÉLECTRIQUE**

VERFAHREN UND VORRICHTUNG ZUM OPTIMIERTEN WIEDERAUFLADEN EINER ELEKTRISCHEN BATTERIE

METHOD AND DEVICE FOR THE OPTIMIZED RECHARGING OF AN ELECTRIC BATTERY

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.09.2011 FR 1157959**

(43) Date de publication de la demande:
**16.07.2014 Bulletin 2014/29**

(73) Titulaires:
• **Electricité de France**
**75008 Paris (FR)**
• **Electricité Réseau Distribution France**
**92085 Paris la Défense Cedex (FR)**

(72) Inventeurs:
• **ROUSSELLE, Mélaine**
**F-92170 Vanves (FR)**
• **ALBERDI, Gaizka**
**F-92170 Vanves (FR)**

(74) Mandataire: **Cabinet Plasseraud**
**52, rue de la Victoire**
**75440 Paris Cedex 09 (FR)**

(56) Documents cités:
**EP-A1- 2 219 278     WO-A2-2009/012018**
**US-A1- 2011 156 651**

## Description

L'invention concerne le domaine de la gestion de la recharge de batteries électriques, et notamment la recharge de batteries électriques de véhicules électriques.

Il existe actuellement une multitude de systèmes électriques disposant d'un système de stockage d'énergie électrique, notamment constitué d'une ou plusieurs batteries électriques et de leur système de recharge associé, pouvant ainsi être connectés à un réseau électrique afin d'être rechargé électriquement.

Parmi ces systèmes électriques, on peut notamment citer les véhicules électriques disposant d'un système de stockage d'énergie électrique pouvant être connecté sur des bornes d'alimentation électriques à l'aide d'une prise de recharge. Les bornes d'alimentation électrique sont chacune connectées au réseau de distribution électrique.

Habituellement, la recharge de la batterie électrique de tels systèmes électriques démarre dès la connexion de cette batterie électrique au réseau de distribution électrique et se termine lors de la déconnexion de cette batterie électrique du réseau de distribution électrique.

Ainsi, en ce qui concerne le cas particulier des véhicules électriques, cette recharge démarre dès le branchement de la prise de recharge du véhicule électrique sur la borne d'alimentation électrique et se poursuit tant que le véhicule électrique n'est pas débranché, c'est-à-dire jusqu'au moment où l'utilisateur du véhicule souhaite reprendre son véhicule ou tant que la batterie n'est pas pleine.

Cependant, ce type de recharge n'est pas optimal, car cette recharge ne tient aucunement compte des contraintes liées au réseau électrique, à la batterie électrique à recharger ou à l'utilisateur du système électrique à recharger.

D'une part, les contraintes du réseau électrique auquel est raccordée la borne d'alimentation électrique peuvent notamment se traduire par une courbe de charge d'un transformateur ou d'un point de livraison, qui n'est pas uniforme dans le temps. Par exemple, un transformateur est sous contrainte quand sa charge dépasse sa puissance nominale.

En effet, plus le niveau de charge du transformateur est élevé, et plus ce transformateur s'échauffe, ce qui accélère son vieillissement. En outre, de grandes variations de charge peuvent induire des dilatations et des contraintes mécaniques assez brutales. A terme, ce transformateur peut devenir plus bruyant par augmentation des jeux.

En ce qui concerne la batterie électrique à recharger, cette dernière peut présenter des niveaux de charge très variés lors de son branchement à une borne d'alimentation électrique, ce qui conditionne la quantité d'énergie électrique nécessaire à obtenir de la borne d'alimentation électrique, et donc la durée de recharge nécessaire pour aboutir à une recharge complète.

Enfin, en ce qui concerne les contraintes de l'utilisateur du système électrique à recharger, ce dernier branche et débranche le système à des instants très variables, dépendant de son emploi du temps. Ainsi, lorsque le système électrique est une voiture électrique, le conducteur de ce véhicule gare et reprend son véhicule à des instants dépendant de son emploi du temps, ce qui conditionne le temps de charge disponible de la borne d'alimentation électrique.

La présente invention a pour objet de remédier aux inconvénients précités, en proposant un procédé de recharge optimisée permettant la prise en compte aussi bien des contraintes liées au réseau électrique que de celles liées à l'utilisateur du système électrique à recharger, ainsi que des contraintes liées à la batterie électrique à recharger, et permettant une meilleure préservation des dispositifs de recharge du réseau électrique.

Elle propose à cet effet un procédé de recharge optimisée tel que défini dans la revendication 1

La présente invention propose en outre un programme d'ordinateur tel que défini dans la revendication 11.

La présente invention propose également un dispositif de recharge optimisée et un système de recharge optimisé tel que défini dans les revendications 12 et 13. Des modes de réalisations particuliers sont définis dans les revendications dépendantes.

D'autres caractéristiques et avantages de l'invention apparaîtront à l'examen de la description détaillée ci-après, et des dessins annexés sur lesquels :

- la figure 1 illustre un système de recharge optimisée de véhicules électriques selon la présente invention ;
- la figure 2 illustre les étapes d'un procédé de recharge optimisée d'un véhicule électrique selon la présente invention ;
- la figure 3 illustre un mode de réalisation d'une étape de vérification préalable du procédé de recharge optimisée selon la présente invention ;
- la figure 4 illustre un mode de réalisation des étapes de détermination d'intervalles de temps de charge et de recharge du procédé de recharge électrique selon la présente invention ; et
- la figure 5 représente un graphique illustrant l'effet positif obtenu en employant le procédé de recharge électrique selon la présente invention.

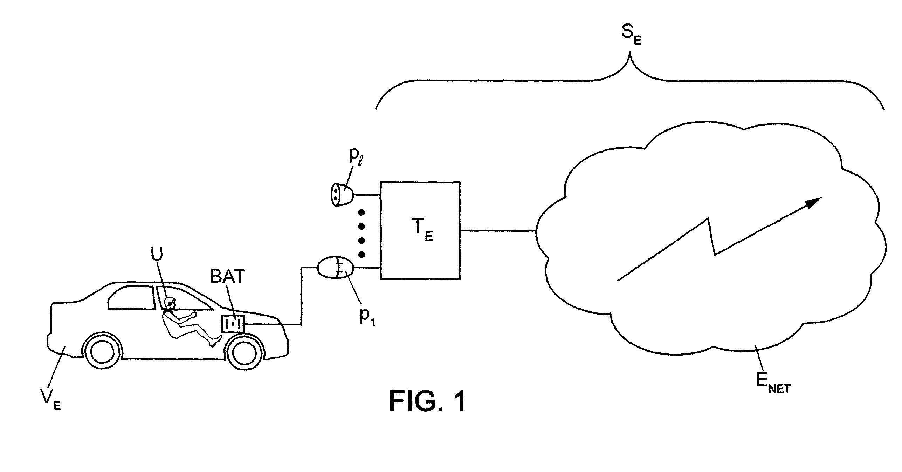

On se réfère tout d'abord à la **figure 1** sur laquelle est illustré un système de recharge optimisée de la batterie électrique d'un système électrique selon la présente invention.

Ce système de recharge optimisée, désigné par $S_E$ sur la figure 1, comprend au moins un dispositif de recharge électrique $T_E$, apte à être connecté au système de recharge de la batterie électrique BAT d'un ou plusieurs systèmes électriques $V_E$ afin de la recharger électriquement.

Un seul dispositif de recharge électrique $T_E$ et un seul système électrique $V_E$ sont représentés sur cette figure 1, à titre purement illustratif, mais le système de recharge optimisée SE peut comprendre un nombre quelconque de dispositifs de recharge électrique afin de pouvoir recharger électriquement un nombre quelconque de systèmes électriques.

Ce dispositif de recharge électrique $T_E$ est lui-même connecté à un réseau d'alimentation électrique $E_{NET}$ afin d'obtenir l'énergie électrique nécessaire à cette recharge et peut consister en un transformateur électrique, par exemple. Ce dispositif $T_E$ dispose ainsi d'un ou plusieurs ports de branchement $p_1,...,p_l$ apte(s) à être connecté(s) à la batterie électrique BAT d'un système électrique pour procéder à sa recharge au moyen de l'énergie électrique fourni par le réseau d'alimentation électrique $E_{NET}$.

Le système électrique $V_E$ comprend une, voire plusieurs, batterie électrique BAT associée à un système de charge de cette batterie. Ce système électrique $V_E$ est utilisé par un utilisateur U qui branche, et débranche, le système de charge de cette batterie électrique BAT au dispositif de recharge électrique $T_E$ en fonction de son emploi de temps.

Sur la figure 1, à titre purement illustratif, le système électrique $V_E$ est représenté comme étant un véhicule électrique, la présente demande trouvant une application particulièrement avantageuse à ce type particulier de système électrique. Dans cet exemple illustratif, le véhicule électrique $V_E$ est conduit par un utilisateur U qui branche et débranche le système de recharge de la batterie électrique BAT au dispositif de recharge électrique $T_E$ en fonction de son emploi de temps. Un tel véhicule électrique peut être une automobile, un vélomoteur, ou tout autre équipement disposant d'une batterie électrique pouvant être rechargée depuis le réseau électrique.

Ainsi, lors de l'optimisation de la recharge du système électrique $V_E$, différentes contraintes s'appliquent au système de recharge optimisée décrit à la figure 1 :

- les contraintes liées au réseau de recharge électrique, telle que la courbe de charge associée au dispositif de recharge électrique $T_E$ ;
- les contraintes liées à la batterie électrique à recharger, telles que le profil de charge de la batterie électrique BAT, ou l'énergie électrique encore stockée dans cette batterie lorsque l'utilisateur U branche cette batterie BAT au dispositif de recharge électrique $T_E$ ; et
- les contraintes liées à l'utilisateur U lui-même, notamment au niveau de son emploi de temps, qui influencent les instants de branchement et de débranchement du système électrique sur le dispositif de recharge électrique $T_E$, et donc la durée disponible de recharge de la batterie BAT.

Dans la présente invention, la batterie électrique BAT du système électrique $V_E$ est ainsi rechargée durant au moins un intervalle de temps de charge $\Delta T_{chg}(i)$ appartenant à une période de temps de charge disponible Td, qui est initiée par le branchement du système de recharge de cette batterie électrique BAT au dispositif de recharge électrique $T_E$, ce qui permet d'optimiser la recharge de cette batterie en fonction de certaines contraintes liées à l'utilisateur en matière d'emploi du temps.

Par ailleurs, l'intervalle de temps de charge $\Delta T_{chg}(i)$ est déterminé en fonction d'une courbe de charge TLC associée au dispositif de recharge électrique $T_E$, ce qui permet également d'optimiser la recharge de la batterie électrique BAT en fonction de contraintes liées au dispositif de recharge électrique $T_E$, et donc au système de recharge optimisée $S_E$.

Une telle courbe de charge TLC peut être estimée à un moment donné, par exemple sur la base d'une variation de charge attendue, ou mise à jour en cours de charge, de manière à assurer une optimisation continue de la charge par rapport à l'état instantané du dispositif de recharge électrique $T_E$. D'une part, à titre illustratif, l'estimation de la courbe de charge TLC peut être effectuée sur la base de modèles prédéfinis de courbe de charge ou de modèles de courbe de charge calculés à partir d'un historique de charges relevées au niveau du dispositif de recharge électrique $T_E$. D'autre part, la mise à jour de la courbe de charge TLC peut en particulier être réalisée grâce à l'échantillonnage en temps-réel de la charge du dispositif de recharge électrique $T_E$. Une telle mise à jour est particulièrement intéressante dans le cas où un grand nombre de batteries se connectent et se rechargent en même temps, ce qui peut induire des variations importantes de la courbe de charge TLC.

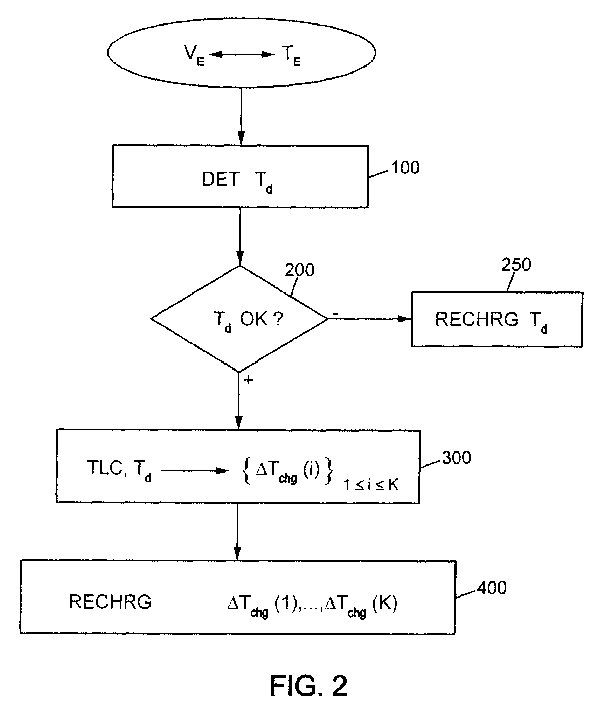

On se réfère maintenant à la **figure 2,** sur laquelle sont illustrées les étapes d'un procédé de recharge optimisée de la batterie électrique d'un système électrique selon la présente invention.

Ce procédé concerne la recharge électrique optimisée de la batterie électrique d'un ou plusieurs systèmes électriques $V_E$ par un dispositif de recharge électrique $T_E$, le système électrique $V_E$ comprenant une batterie électrique BAT associée à un système de recharge pouvant être connecté à ce dispositif de recharge électrique $T_E$ afin de procéder à cette recharge. Par la suite, la recharge optimisée d'un seul système électrique $V_E$ est décrite à titre illustratif, mais le procédé peut s'appliquer à la recharge d'un nombre quelconque de systèmes électriques.

Ce procédé peut tout d'abord comprendre la détermination (étape 100) d'une période de temps de charge disponible Td, effectuée pour tenir compte des contraintes de l'utilisateur, en particulier en termes d'emploi du temps, ce qui influence le temps disponible pour procéder à la recharge de la batterie électrique BAT.

Ainsi, l'instant $t_A$ de branchement du système de recharge de la batterie électrique BAT au dispositif de recharge électrique $T_E$ permet de déterminer le début de la période de temps de charge disponible Td. En d'autres termes, cet instant $t_A$ de branchement de la batterie électrique initie la période de temps de charge disponible Td.

Pour déterminer l'instant $t_D$ correspondant à la fin la période de temps de charge disponible Td, il est avantageux de demander à l'utilisateur d'indiquer l'heure à laquelle il prévoit de déconnecter le système électrique $V_E$ (par exemple l'heure à laquelle il prévoit de reprendre son véhicule électrique), par exemple son heure de départ le matin avant de partir au travail. L'utilisateur U peut ainsi fournir une indication relative à cet instant $t_D$ de fin de recharge, par exemple via une interface web spécifiquement dédiée à cet effet sur un smartphone ou sur le tableau de bord du véhicule électrique employé.

Une fois cette période de temps de charge disponible Td déterminée, il est avantageux de vérifier préalablement (étape 200) que la période de temps de charge disponible Td est suffisante, afin de n'engager le processus de recharge optimisée que lorsque c'est le cas. Dans le cas contraire, un processus de recharge électrique classique peut être mis en oeuvre (étape 250) durant toute la durée de la période de temps de charge disponible Td, comme cela sera expliqué ultérieurement.

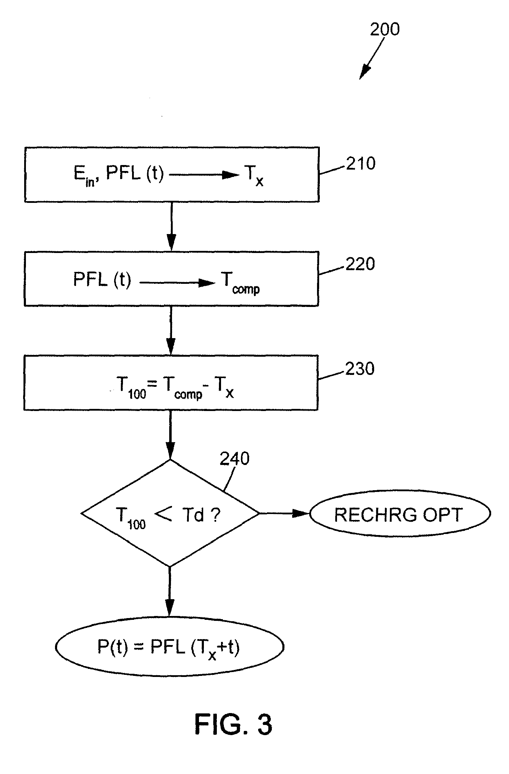

La **figure 3** illustre un mode de réalisation d'une telle étape 200 de vérification préalable.

Dans ce mode de réalisation, une durée de charge partielle Tx, correspondant au niveau d'énergie électrique résiduelle $E_{in}$ contenue dans la batterie électrique BAT lors de son branchement au dispositif de recharge $T_E$, est tout d'abord calculée (étape 210). En d'autres termes, cette durée de charge partielle Tx correspond au temps nécessaire pour charger la batterie électrique BAT, à partir d'un état où elle est vide d'énergie (c'est-à-dire en partant d'un état de charge SoC nul), jusqu'au niveau d'énergie électrique résiduelle $E_{in}$.

Dans le cas particulier où l'information disponible au moment du branchement consiste en un état de charge $SoC_0$ de la batterie BAT, ce niveau d'énergie électrique résiduelle $E_{in}$ est calculé au préalable au moyen de l'équation (1) suivante :

$$(1) \qquad\qquad E_{in} = E_{\exp l} \cdot SoC_0$$

où :

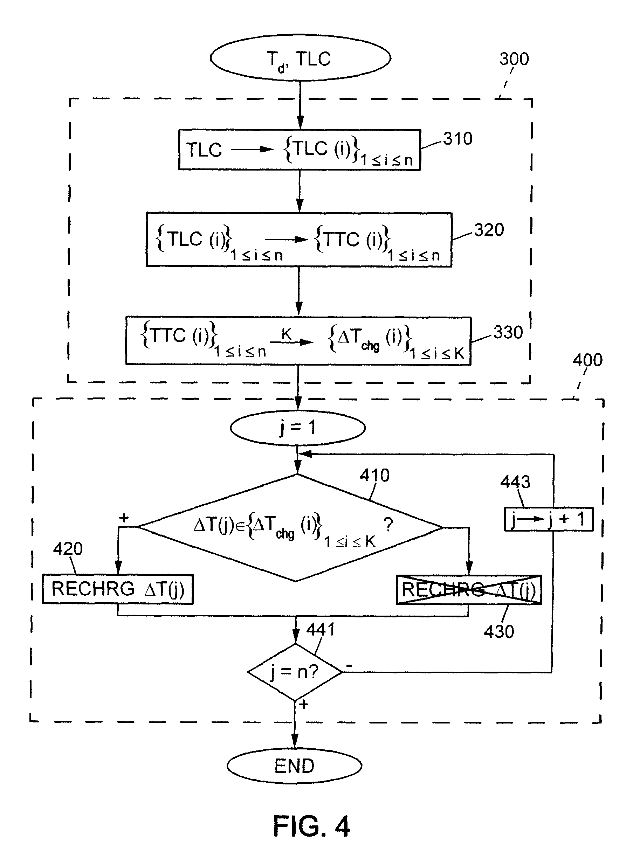

- $E_{expl}$ est la capacité exploitable de cette batterie BAT ; et
- $SoC_0$ est l'état de charge de la batterie électrique BAT au moment de son branchement au dispositif de recharge $T_E$ (i.e. à l'instant $t_A$ illustré sur la figure 4).

La durée de charge partielle Tx est alors déterminée grâce à l'équation (2) suivante :

$$(2) \qquad\qquad E_{in} = \eta_{BAT} \cdot \eta_{chrgr} \int_0^{Tx} PFL(t)dt \ ,$$

où :

- $\eta_{BAT}$ est le paramètre d'efficacité de la batterie électrique BAT, compris entre 0 et 100% ;
- $\eta_{chrgr}$ est le paramètre d'efficacité du chargeur de cette batterie BAT, compris également entre 0 et 100% ; et
- $PFL(t)$ est le profil de la charge de la batterie électrique BAT prélevée du réseau d'alimentation électrique.

La durée de charge complète Tcomp, correspondant au temps nécessaire à la charge complète de la batterie électrique BAT à partir d'un état où elle est vide d'énergie (c'est-à-dire en partant d'un état de charge SoC nul), est ensuite déterminée (étape 220) en fonction du le profil PFL(t) de charge de la batterie électrique BAT.

En particulier, cette durée de charge Tcomp est calculée grâce à l'équation (3) suivante :

$$(3) \qquad\qquad E_{\max} = \eta_{BAT} \cdot \eta_{chrgr} \int_0^{Tcomp} PFL(t)dt$$

où $E_{max}$ est le niveau d'énergie électrique atteint à la fin de cette charge complète, correspondant typiquement au niveau d'énergie de charge maximum de la batterie électrique BAT. La présente invention ne se limite cependant pas à ce seul cas, et peut aussi s'appliquer au cas où $E_{max}$ est un niveau d'énergie électrique correspondant à un certain niveau d'énergie de charge souhaité, différent du niveau maximum de charge de la batterie électrique BAT.

Les étapes 210 de détermination de la durée de charge partielle Tx et 220 de détermination de la durée de charge complète Tcomp ne sont pas nécessairement réalisées dans l'ordre indiqué précédemment, mais peuvent très bien être réalisées dans l'ordre inverse, c'est-à-dire avec une détermination de la durée de charge complète Tcomp précédant la détermination de la durée de charge partielle Tx.

Une fois les durées Tx et Tcomp déterminées, la durée $T_{100}$ de charge nécessaire pour une charge complète de la batterie BAT contenant l'énergie résiduelle $E_{in}$ peut être déterminée (étape 230) au moyen de l'équation suivante :

$$(4) \qquad\qquad T_{100} = Tcomp - Tx$$

Cette durée $T_{100}$ peut alors être comparée (étape 240) avec la durée de la période de temps de charge disponible Td, afin de déterminer si l'on dispose de suffisamment de temps pour effectuer une recharge complète.

Si cette durée $T_{100}$ est inférieure à la durée de la période de temps de charge disponible Td, alors il est possible de mettre avantageusement le procédé de recharge optimisé selon la présente invention. Si, par contre, cette durée $T_{100}$ est supérieure à la durée de la période de temps de charge disponible Td, alors une recharge complète et optimisée de la batterie électrique BAT n'est pas possible.

Dans ce dernier cas, on peut procéder à une recharge électrique traditionnelle au cours de laquelle le profil de charge PFL(t), tronqué par la durée Tx, est appliqué durant toute la période de temps de charge disponible Td, c'est-à-dire où le plan de charge durant cette période Td se base sur une puissance de charge correspondant à P(t) = PFL(Tx + t).

Pour revenir au procédé de recharge optimisée illustré à la figure 2, après avoir éventuellement vérifié que la durée $T_{100}$ est bien inférieure à la période de temps de charge disponible Td, un ou plusieurs intervalle de temps de charge $\Delta T_{chg}(1)$ à $\Delta T_{chg}(K)$ (où K est un entier supérieur ou égal à un), appartenant à la période de temps de charge disponible Td initiée par le branchement du système de recharge de la batterie électrique au dispositif de recharge électrique, sont alors déterminés (étape 300), en fonction d'une courbe de charge TLC associée au dispositif de recharge électrique $T_E$.

La batterie électrique BAT est alors rechargée (étape 400) durant le(s) intervalle(s) de temps de charge $\Delta T_{chg}(1)$ à $\Delta T_{chg}(K)$, afin de procéder à la recharge optimisée de cette batterie électrique BAT. Cette recharge est effectuée selon le profil de charge de la batterie pendant le(s) intervalle(s) de temps de charge $\Delta T_{chg}(1)$ à $\Delta T_{chg}(K)$. Ce profil de charge est ainsi découpé en différentes périodes placés aux moments les plus adéquats de la période Td par rapport aux contraintes précitées.

On se réfère maintenant à la **figure 4** qui illustre un mode de réalisation aussi bien de l'étape 300 de détermination que de l'étape 400 de recharge de la batterie électrique BAT selon la présente invention.

En particulier, l'étape de détermination comprend avantageusement, d'une part, l'échantillonnage (étape 310) de la courbe de charge TLC associée au dispositif de recharge électrique $T_E$, sur la période de temps de charge disponible Td, afin d'obtenir un ensemble $\{TLC(i)\}_{1 \leq i \leq n}$ de valeurs de puissance de courbe de charge TLC(1) à TLC(n) associées chacune à des intervalles de temps $\Delta T(1)$ à $\Delta T(n)$ consécutifs dans la période de temps de charge disponible Td.

Cet échantillonnage est avantageusement réalisé avec un pas de temps prédéterminé correspondant à une durée d'intervalle de temps de recharge $\Delta T$, une valeur de puissance de courbe de charge TLC(i) étant alors associée à l'indice de temps i désignant le i-ème intervalle de temps $\Delta T(i)$ compris dans la période de temps de charge disponible Td.

Ainsi, à l'issue de cette phase d'échantillonnage, des valeurs de puissance de courbe de charge TLC(1),...,TLC(i),...,TLC(n) sont associées respectivement à une succession d'intervalles de temps $\Delta T(1)$,...,$\Delta T(i)$,...,$\Delta T(n)$ consécutifs, eux-mêmes désignés par une succession d'indice de temps 1,...,i,....n, respectant la relation $\Delta T(i)=i*\Delta T$.

L'échantillonnage de la courbe de charge TLC permet de travailler en temps discret, notamment lors du tri des indices associés aux valeurs de puissance de courbe de charge, ce qui est plus facilement réalisable notamment avec des moyens informatiques.

Une fois la courbe de charge TLC échantillonnée, les valeurs de puissance de courbe de charge TLC(1) à TLC(n) sont triées (étape 320) par ordre croissant afin d'obtenir un ensemble $\{TTC(i)\}_{1 \leq i \leq n}$ de valeurs de puissance de courbe de charge triées associées respectivement à l'un desdits intervalles de temps $\Delta T(1)$ à $\Delta T(n)$.

Ainsi, si les valeurs suivantes sont obtenues, purement à titre d'exemple, en échantillonnant la courbe de charge toutes les heures entre 1 heure et 7 heures du matin :

TLC(1) = 75 kW

TLC(2) = 80 kW
TLC(3) = 70 kW
TLC(4) = 65 kW
TLC(5) = 65 kW
TLC(6) = 60 kW
TLC(7) = 70 kW

Alors, on obtient les valeurs de puissance de courbe de charge triées suivantes :

TTC(1) = TLC(6) = 60 kW;
TTC(2) = TLC(4) = 65 kW ;
TTC(3) = TLC(5) = 65 kW;
TTC(4) = TLC(3) = 70 kW;
TTC(5) = TLC(7) = 70 kW;
TTC(6) = TLC(1) = 75 kW; et
TTC(7) = TLC(2) = 80 kW.

Dans ce tri, lorsque plusieurs valeurs de puissance de courbe de charge TLC(i) sont identiques, on peut les trier par exemple selon leur ordre chronologique, ce qui illustré ci-avant avec les valeurs TLC(4) et TLC(5) qui donnent respectivement les valeurs de puissance de courbe de charge triées TTC(2) et TTC(3).

La batterie électrique BAT est ensuite rechargée (étape 400) pendant au moins un intervalle de temps de charge $\Delta T_{chg}(i)$ correspondant à un intervalle de temps $\Delta T(i)$ associé à la première valeur de puissance de courbe de charge triées TTC(1).

La recharge électrique du véhicule $V_E$ pendant cet intervalle de temps de charge $\Delta T_{chg}(i)$ impacte donc la courbe de charge TLC à un de ses minima sur la période Td, et évite ainsi de rehausser des valeurs élevées de charge engendrant trop d'effets néfastes par rapport au dispositif de recharge électrique $T_E$.

Si nécessaire, la recharge de la batterie BAT peut s'effectuer pendant plusieurs intervalles de temps de charge $\Delta T_{chg}(i)$ correspondant à des intervalle de temps $\Delta T(i)$ associé aux premières valeurs de puissance de courbe de charge triées TTC(1),TTC(2), etc., afin d'effectuer prioritairement la recharge de la batterie BAT pendant des périodes de faible puissance de la courbe de charge TLC du dispositif de recharge électrique $T_E$. C'est en particulier le cas lorsque la recharge sur un seul intervalle de charge $\Delta T_{chg}(i)$ n'est pas suffisante pour recharger complètement la batterie électrique BAT.

Ainsi, dans un mode de réalisation, la recharge de la batterie BAT est effectuée durant K intervalles de temps de charge $\Delta T_{chg}(1)$ à $\Delta T_{chg}(K)$ sélectionnés pour correspondre aux périodes de plus faible puissance de la courbe de charge TLC du dispositif de recharge électrique $T_E$.

Ce nombre K est un nombre entier dépendant avantageusement du niveau d'énergie électrique résiduelle $E_{in}$ contenue dans la batterie électrique lors du branchement de cette batterie électrique au dispositif de recharge électrique, afin de permettre la recharge complète de la batterie électrique BAT.

En particulier, ce nombre K peut être déterminé à partir de ce niveau d'énergie électrique $E_{in}$ résiduelle, ainsi que du profil de charge PFL(t) de cette batterie électrique, de la manière suivante :

- on détermine la durée $T_{100}$ nécessaire à la recharge complète de la batterie électrique, à partir du niveau d'énergie électrique $E_{in}$ résiduelle et du profil de charge PFL(t) de la batterie électrique, similairement à ce qui a été décrit précédemment au sujet de la vérification préalable de la période de temps de charge disponible ;
- on procède à la division de cette durée $T_{100}$ par la durée $\Delta T$ d'un pas d'échantillonnage (par exemple 15 minutes), le nombre K pouvant être choisi comme étant un nombre entier dont la valeur est strictement supérieure au quotient de cette division, avantageusement le nombre entier correspondant à la première valeur entière supérieure à ce quotient afin de limiter la durée de recharge à ce qui est nécessaire pour atteindre une recharge complète de la batterie.

Une fois ce nombre K déterminé, les intervalles de temps de charge $\Delta T_{chg}(1)$ à $\Delta T_{chg}(K)$ sont sélectionnés (étape 330), parmi l'ensemble des intervalles de temps $\Delta T(1)$ à $\Delta T(n)$, pour correspondre aux intervalles de temps associés aux premières valeurs de puissance de courbe de charge TTC(1) à TTC(K) triées par ordre croissant. Les $\Delta T_{chg}(i)$ sont ainsi sélectionnés de manière à être dans l'ordre chronologique.

Ainsi, pour reprendre l'exemple précédent, pour un nombre K=3, les quatrième, cinquième et sixième intervalles de temps $\Delta T(4)$, $\Delta T(5)$ et $\Delta T(6)$, associés respectivement aux valeurs de puissance de courbe de charge TLC(4),TLC(5) et TLC(6), seront sélectionnés comme étant des intervalles de temps de charge $\Delta T_{chg}(1)$ à $\Delta T_{chg}(3)$ durant lesquels la recharge de la batterie électrique est activée.

Pour un nombre K=4, outre les intervalles de temps $\Delta T(4)$, $\Delta T(5)$ et $\Delta T(6)$ précités, un quatrième intervalle de temps de charge $\Delta T_{chg}(4)$ est choisi parmi les troisième et septièmes intervalles de temps associés à TLC(3) et TLC(7), en l'occurrence $\Delta T(3)$ qui correspond à la quatrième valeur de puissance de courbe de charge triées TTC(4).

Une fois, les intervalles de temps de charge $\Delta T_{chg}(1)$ à $\Delta T_{chg}(K)$ déterminés, on procède alors à la recharge de la batterie électrique BAT durant ces intervalles de temps de charge (étape 400).

Dans le mode de réalisation illustré à la figure 3, cette phase 400 de recharge comprend, pour chacun des intervalles de temps $\Delta T(1)$ à $\Delta T(n)$ consécutifs, la vérification de la correspondance entre l'intervalle de temps $\Delta T(j)$ en question et l'un des intervalles de temps de charge $\Delta T_{chg}(1)$ à $\Delta T_{chg}(K)$ (sous-étape 410).

Si l'intervalle de temps $\Delta T(j)$ est bien l'un des intervalles de temps de charge $\Delta T_{chg}(1)$ à $\Delta T_{chg}(K)$, alors la recharge de la batterie électrique est activée (sous-étape 420) durant l'intervalle de temps $\Delta T(j)$.

Par contre, si l'intervalle de temps $\Delta T(j)$ ne correspond pas à l'un des intervalles de temps de charge $\Delta T_{chg}(1)$ à $\Delta T_{chg}(K)$, alors la recharge de la batterie électrique est inhibée (sous-étape 430) durant l'intervalle de temps $\Delta T(j)$. En d'autres termes, aucune recharge n'a lieu en dehors des K intervalles de temps de charge $\Delta T_{chg}(1)$ à $\Delta T_{chg}(K)$.

Cette opération est répétée successivement lors de chacun des intervalles de temps $\Delta T(j)$ de la période de temps de charge disponible Td, comme représenté par la boucle d'incrémentation de l'indice j (sous-étapes 441 et 443).

Ainsi, dans ce premier mode de réalisation, la recharge de la batterie électrique BAT est effectuée seulement durant un certain nombre d'intervalles de temps correspondant aux valeurs minimales de la courbe de charge du dispositif de recharge électrique $T_E$.

Ce mode de réalisation est particulièrement adapté au cas d'une recharge optimisée seulement dans le temps, avec une commande de charge de type « tout ou rien » venant de la borne d'alimentation électrique, dans lequel c'est le système électrique $V_E$ qui gère la recharge selon son système de gestion d'alimentation (BMS pour <u>B</u>attery <u>Ma</u>nagement <u>S</u>ystem en anglais) et applique donc son profil de charge entrecoupé de pauses.

Dans un mode de réalisation avantageux, on peut chercher à éviter l'activation de la recharge au-delà d'une valeur de puissance limite $P_{lim}$ (par exemple 80 kW) pour laquelle les niveaux de charge dépassant cette valeur sont considérés comme défavorables.

Cette valeur de puissance limite $P_{lim}$ peut être constante sur l'ensemble de la période de charge disponible ou présenter des variations, auquel cas une valeur de puissance limite $P_{lim}(i)$ est associée à chaque intervalle de temps $\Delta T(i)$, les valeurs $P_{lim}(i)$ pouvant être différentes les unes des autres.

Dans ce mode de réalisation, pour chacun des intervalles de temps $\Delta T(j)$ consécutifs, après avoir sélectionné les intervalles de temps $\Delta T(j)$ correspond à l'un des intervalles de temps de charge $\Delta T_{chg}(1)$ à $\Delta T_{chg}(K)$ déterminés précédemment, on procède à la comparaison de la valeur de puissance limite $P_{lim}(i)$, associée à l'intervalle de temps $\Delta T(j)$, avec une valeur prévisionnelle de charge augmentée, désignée par TLC+VE(j), correspondant à la somme de la valeur de charge TLC(j) associé à l'intervalle de temps $\Delta T(j)$ et de la valeur de puissance de charge prélevée par le système de recharge de la batterie électrique BAT.

L'activation (sous-étape 420) de la recharge de la batterie électrique n'a alors lieu durant l'intervalle de temps $\Delta T(j)$ que si la valeur prévisionnelle de charge augmentée TLC(j)+VE(j) associée à cet intervalle de temps $\Delta T(j)$ est inférieure à la valeur de puissance limite $P_{lim}(i)$, et si cet intervalle de temps $\Delta T(j)$ correspond en outre à l'un des intervalles de temps de charge $\Delta T_{chg}(1)$ à $\Delta T_{chg}(K)$.

Par contre, si la valeur prévisionnelle de charge augmentée TLC+VE(j) associée à cet intervalle de temps $\Delta T(j)$ est supérieure ou égale à la valeur de puissance limite $P_{lim}(i)$, alors la recharge de la batterie électrique est inhibée (sous-étape 430) durant l'intervalle de temps $\Delta T(j)$, que intervalle de temps $\Delta T(j)$ corresponde, ou non, à l'un des intervalles de temps de charge $\Delta T_{chg}(1)$ à $\Delta T_{chg}(K)$.

Ainsi, en évitant de recharger la batterie électrique BAT dans des zones de la courbe de charge TLC supérieures ou égales à la valeur de puissance limite $P_{lim}$, ce mode de réalisation préserve le dispositif de recharge électrique $T_E$, moyennant une éventuelle recharge incomplète de la batterie électrique BAT.

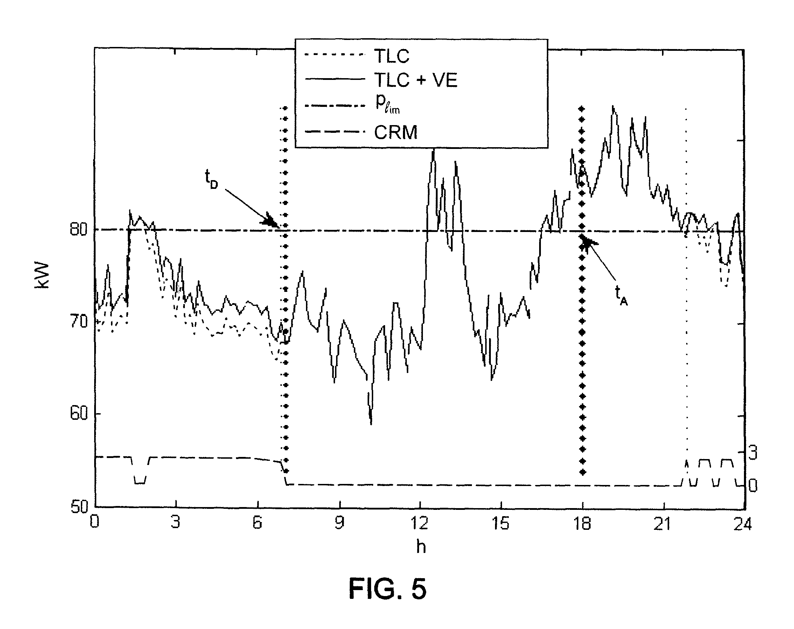

La **figure 5** est un graphique illustrant l'effet positif obtenu au moyen du procédé de recharge optimisée selon la présente invention.

Sur ce graphique sont illustrées, d'une part, la courbe de charge TLC d'un transformateur électrique durant une journée entière, ainsi que la courbe représentant l'évolution temporelle de la puissance limite $P_{lim}$ au-delà de laquelle cette courbe de charge TLC induit des effets délétères.

L'instant d'arrivée $t_A$ de l'utilisateur à 18 heures (i.e. l'instant de branchement d'un véhicule électrique $V_E$ au transformateur) et l'instant de départ $t_D$ de l'utilisateur vers 7 heures (i.e. l'instant de débranchement du véhicule électrique $V_E$ de la borne d'alimentation) sont indiqués, ce qui permet de définir une période de charge disponible Td équivalent à l'intervalle $[t_A ; t_D]$.

En bas de ce graphique est illustrée, d'autre part, la courbe CRM représentant temporellement l'alternance de phases d'activation et d'inhibition de charge obtenue grâce au procédé de recharge optimisée selon la présente invention.

On voit bien en particulier, sur cette courbe CRM, que l'activation de la recharge optimisée a lieu sur des intervalles de temps de charge situés ponctuellement vers 21 heures, 22 heures et 23 heures. En outre, l'activation de la recharge optimisée a lieu de façon quasi-permanente entre 0 et 7 heures, hormis sur une période aux alentours de 1h30-2h du matin. En dehors de ces intervalles de temps de charge, la recharge est inhibée.

Enfin, la courbe de charge résultante, désignée par TLC+VE, est illustrée. On voit bien, sur cette courbe de charge résultante, que ce sont principalement les parties minimales de la courbe de charge TLC, situées en dessous de la valeur de puissance limite $P_{lim}$, qui sont rehaussées par la recharge optimisée du véhicule $V_E$. La courbe de charge TLC est donc lissée grâce au procédé de la présente invention.

Par conséquent, l'augmentation de la courbe de charge induite par la recharge du véhicule $V_E$ se cantonne à des valeurs de charge minimales de la courbe de charge TLC, ce qui limite les effets délétères engendrés pour le transformateur électrique, contrairement à ce qui serait le cas si la recharge était activée de façon permanente durant la période $[t_A; t_D]$. Avec la présente invention, la consommation électrique engendrée par la recharge se réalise seulement pendant les instants favorables (c'est-à dire aux valeurs minimales de TLC).

Les différentes étapes du procédé de recharge optimisée décrit précédemment peuvent notamment être mises en oeuvre par un programme, susceptible d'être exécuté par une unité de traitement d'un système de recharge optimisée, implémentée par exemple sous la forme d'un ordinateur ou d'un processeur de données, ce programme comportant des instructions pour commander l'exécution des étapes d'un procédé tel que mentionné ci-dessus.

En particulier, l'unité de traitement en question peut être située dans le dispositif de recharge optimisée $T_E$ ou dans le système électrique $V_E$, afin de gérer localement la recharge des véhicules électrique.

L'unité de traitement en question peut aussi être située à distance de ce dispositif de recharge optimisée $T_E$, dans un système informatique distant appartenant au système de recharge optimisée $S_E$, afin de gérer de façon centralisée cette recharge, ce qui est approprié dans le cas d'une flotte de grande envergure. Dans ce dernier cas, des consignes sont communiquées au dispositif de recharge optimisée $T_E$ ou au système électrique $V_E$ via différents réseaux de télécommunication afin de gérer la recharge optimisée.

Pour sa part, le programme peut utiliser n'importe quel langage de programmation, et être sous la forme d'un code source, code objet, ou de code intermédiaire entre code source et code objet, tel que dans une forme partiellement compilée, ou dans n'importe quelle autre forme souhaitable.

L'invention vise aussi un support d'informations lisible par un ordinateur ou processeur de données, et comportant des instructions d'un programme tel que mentionné ci-dessus. Ce support d'informations peut être n'importe quelle entité ou dispositif capable de stocker le programme. Par exemple, le support peut comporter un moyen de stockage, tel qu'une ROM, par exemple un CD-ROM ou une ROM de circuit microélectronique, ou encore un moyen d'enregistrement magnétique, par exemple une disquette ou un disque dur.

D'autre part, le support d'informations peut être un support transmissible tel qu'un signal électrique, électromagnétique ou optique, qui peut être acheminé via un câble électrique ou optique, par radio ou par d'autres moyens. Le programme selon l'invention peut être en particulier téléchargé sur un réseau de type Internet. Alternativement, le support d'informations peut être un circuit intégré dans lequel le programme est incorporé, le circuit étant adapté pour exécuter ou pour être utilisé dans l'exécution du procédé en question.

Le procédé de recharge optimisée de la présente invention trouve une application particulièrement intéressante dans le cadre de la recharge de batteries électrique de type ne présentant pas d'effet mémoire, d'inconvénients de charges partielles ou de contre-indication du constructeur, ce type de batterie passant d'un état d'activation de charge à un état d'inhibition de charge avec un faible délai de transition, et ne se rechargeant pas nécessairement à 100%. Ainsi, la batterie électrique BAT peut avantageusement être de type Lithium-Ion.

Bien entendu, l'invention n'est pas limitée aux exemples de réalisation ci-dessus décrits et représentés, à partir desquels on pourra prévoir d'autres modes et d'autres formes de réalisation, sans pour autant sortir du cadre de l'invention telle que défini dans les revendication.

Ainsi, le système électrique a été illustré précédemment sous la forme d'un véhicule électrique. Cependant, le système électrique $V_E$ peut très bien prendre la forme de n'importe quel système électrique ayant des capacités de stockage d'énergie électrique, par exemple un téléphone portable disposant d'une batterie électrique à recharger.

## Revendications

1. Procédé de recharge optimisée de la batterie électrique (BAT) d'au moins un système électrique ($V_E$) par un dispositif de recharge électrique ($T_E$), dans lequel la batterie électrique (BAT) est rechargée (400) durant au moins un intervalle de temps de charge ($\Delta T_{chg}(i)$), appartenant à une période de temps de charge disponible (Td) initiée par le branchement du système de recharge de la batterie électrique au dispositif de recharge électrique, déterminé (300) en fonction d'une courbe de charge (TLC) associée audit dispositif de recharge électrique, dans lequel la détermination (300) de l'intervalle de temps de charge ($\Delta T_{chg}(i)$), comprend :

l'échantillonnage (310) de la courbe de charge (TLC) sur la période de temps de charge disponible (Td) afin d'obtenir un ensemble de valeurs de puissance de courbe de charge ($\{TLC(i)\}_{1\leq i\leq n}$) associées à des intervalles de temps ($\Delta T(i)$) consécutifs; et

le tri (320), par ordre croissant, des valeurs de puissance de courbe de charge ($\{TLC(i)\}_{1\leq i\leq n}$) afin d'obtenir un ensemble de valeurs de puissance de courbe de charge triées ($\{TTC(i)\}_{1\leq i\leq n}$) associées respectivement à l'un desdits intervalles de temps ;

la batterie électrique (BAT) étant rechargée (400) durant au moins un intervalle de temps de charge ($\Delta T_{chg}(i)$) correspondant à un intervalle de temps associé à la première valeur de puissance de courbe de charge triées (TTC(1)).

2. Procédé de recharge optimisée selon la revendication 1, dans lequel la batterie électrique (BAT) est rechargée durant K intervalles de temps de charge ($\{\Delta T_{chg}(i)\}_{1\leq i\leq K}$) sélectionnés (330) parmi les intervalles de temps ($\Delta T(i)$) associés aux premières valeurs de puissance de courbe de charge triées, K étant un nombre entier, supérieur ou égal à un, dépendant du niveau d'énergie électrique ($E_{in}$) contenue dans la batterie électrique lors du branchement du système de recharge de la batterie électrique au dispositif de recharge électrique.

3. Procédé de recharge optimisée selon la revendication 2, dans lequel le nombre K est déterminé à partir du niveau d'énergie électrique ($E_{in}$) contenue dans la batterie électrique lors du branchement de la batterie électrique au dispositif de recharge électrique et du profil de charge (PFL(t)) de ladite batterie électrique.

4. Procédé de recharge optimisée selon l'une des revendications 1 à 3, dans lequel la recharge (400) de la batterie électrique (BAT) comprend, pour chacun des intervalles de temps ($\Delta T(j)$) consécutifs:

l'activation (420) de la recharge de la batterie électrique durant l'intervalle de temps ($\Delta T(j)$) si ledit intervalle de temps ($\Delta T(j)$) est un des intervalles de temps de charge ($\Delta T_{chg}(j)$) ; et

l'inhibition (430) de la recharge de la batterie électrique durant l'intervalle de temps ($\Delta T(j)$) si ledit intervalle de temps ($\Delta T(i)$) n'est pas un des intervalles de temps de charge ($\Delta T_{chg}(j)$).

5. Procédé de recharge optimisée selon la revendication 4, dans lequel la recharge (400) de la batterie électrique comprend en outre, pour chacun des intervalles de temps ($\Delta T(j)$) consécutifs, la comparaison de la valeur de charge (TLC(j)) associée audit intervalle de temps ($\Delta T(j)$) avec une valeur de puissance limite ($P_{lim}(j)$ ;

l'activation (420) de la recharge de la batterie électrique n'ayant lieu durant l'intervalle de temps ($\Delta T(j)$) que si la valeur de charge (TLC(j)+VE(j)) associée audit intervalle de temps ($\Delta T(j)$) est inférieure à la valeur de puissance limite ($P_{lim}(j)$) ; et

la recharge de la batterie électrique étant inhibée (430) durant l'intervalle de temps ($\Delta T(j)$) si la valeur de charge (TLC(j)) associée audit intervalle de temps ($\Delta T(j)$) est supérieure ou égale à la valeur de puissance limite ($P_{lim}(j)$).

6. Procédé de recharge optimisée selon l'une des revendications 1 à 5, dans lequel la période de temps de charge disponible (Td) est déduite (100) en fonction de l'instant ($t_A$) de branchement du système de recharge de la batterie électrique (BAT) au dispositif de recharge électrique ($T_E$) et d'une indication relative à un instant ($t_D$) de fin de recharge fournie par l'utilisateur du véhicule électrique.

7. Procédé de recharge optimisée selon l'une des revendications 1 à 6, comprenant une vérification préalable (200) de la durée de la période de temps de charge disponible (Td) en fonction de la durée ($T_{100}$) nécessaire à la recharge complète de la batterie électrique (BAT), la recharge (400) de la batterie électrique durant au moins un intervalle de temps de charge ($\Delta T_{chg}(i)$) n'ayant lieu que si la durée de la période de temps de charge disponible (Td) est supérieure à la durée ($T_{100}$) nécessaire à la recharge complète de la batterie électrique.

8. Procédé de recharge optimisée selon l'une des revendications 1 à 7, dans lequel la batterie électrique ne présente substantiellement aucun effet de mémoire.

9. Procédé de recharge optimisée selon la revendication 8, dans lequel la batterie électrique est une batterie type Lithium -Ion.

10. Procédé de recharge optimisée selon l'une des revendications 1 à 9, dans lequel le système électrique ($V_E$) est un véhicule électrique.

11. Programme d'ordinateur comprenant des instructions pour mettre en oeuvre les étapes du procédé selon l'une des revendications 1 à 10 lorsqu'il est exécuté par une unité de traitement d'un système de recharge électrique.

**12.** Dispositif de recharge optimisée ($T_E$) de la batterie électrique (BAT) d'au moins un système électrique ($V_E$), connecté à un réseau d'alimentation électrique ($E_{NET}$) et comprenant au moins un port de branchement ($p_1$) apte à être connecté au système de recharge de la batterie électrique (BAT), le dispositif étant configuré pour mettre en oeuvre les étapes du procédé selon l'une des revendications 1 à 10 suite au branchement du système de recharge de la batterie électrique (BAT) sur le port de branchement du dispositif de recharge optimisée.

**13.** Système de recharge optimisée ($S_E$) pour la recharge électrique d'un ensemble composé d'au moins un système électrique ($V_E$) comprenant une batterie électrique (BAT), le système de recharge optimisée comprenant un réseau d'alimentation électrique ($E_{NET}$) et au moins un dispositif de recharge électrique ($T_E$) selon la revendication 12, connecté audit réseau d'alimentation électrique.

**14.** Système de recharge optimisée ($S_E$) selon la revendication 13, comprenant en outre un système informatique distant, connecté au dispositif de recharge électrique et comprenant une unité de traitement apte à mettre oeuvre les étapes du procédé selon l'une des revendications 1 à 10.

**Patentansprüche**

**1.** Verfahren zum optimierten Wiederaufladen der elektrischen Batterie (BAT) mindestens eines elektrischen Systems ($V_E$) durch eine elektrische Ladevorrichtung ($T_E$), bei dem die elektrische Batterie (BAT) während mindestens eines Ladezeitintervalls ($\Delta T_{chg}(i)$) wieder aufgeladen wird (400), das einer verfügbaren Ladezeitperiode (Td) angehört, die durch das Anstecken des Systems zum Wiederaufladen der elektrischen Batterie an die elektrische Ladevorrichtung initiiert wird, und in Abhängigkeit von einer Ladekurve (TLC), die der elektrischen Ladevorrichtung zugeordnet ist, bestimmt wird (300),
wobei die Bestimmung (300) des Ladezeitintervalls ($\Delta T_{chg}(i)$) umfasst:

das Abtasten (310) der Ladekurve (TLC) über die verfügbare Ladezeitperiode (Td), um eine Gesamtheit von Leistungswerten der Ladekurve ($\{TLC(i)\}_{1 \leq i \leq n}$) zu erhalten, die aufeinanderfolgenden Zeitintervallen ($\Delta T(i)$) zugeordnet sind; und
das Sortieren (320) in aufsteigender Reihenfolge der Leistungswerte der Ladekurve ($\{TLC(i)\}_{1 \leq i \leq n}$), um eine Gesamtheit von sortierten Leistungswerten der Ladekurve ($\{TTC(i)\}_{1 \leq i \leq n}$) zu erhalten, die jeweils einem der Zeitintervalle zugeordnet sind;
wobei die elektrische Batterie (BAT) während mindestens eines Ladezeitintervalls ($\Delta T_{chg}(i)$) wieder aufgeladen wird (400), das einem Zeitintervall entspricht, das dem ersten sortierten Leistungswert der Ladekurve (TTC(1)) zugeordnet ist.

**2.** Verfahren zum optimierten Wiederaufladen nach Anspruch 1, bei dem die elektrische Batterie (BAT) während K Ladezeitintervallen ($\{\Delta T_{chg}(i)\}_{1 \leq i \leq K}$) wieder aufgeladen wird, die unter den Zeitintervallen ($\Delta T(i)$) ausgewählt werden (330), die den ersten sortierten Leistungswerten der Ladekurve zugeordnet sind, wobei K eine ganze Zahl größer oder gleich eins ist, die von dem elektrischen Energieniveau ($E_{in}$) abhängt, das in der elektrischen Batterie beim Anstecken des Systems zum Wiederaufladen der elektrischen Batterie an die elektrische Ladevorrichtung enthalten ist.

**3.** Verfahren zum optimierten Wiederaufladen nach Anspruch 2, bei dem die Zahl K auf Basis des elektrischen Energieniveaus ($E_{in}$), das in der elektrischen Batterie beim Anstecken der elektrischen Batterie an die elektrische Ladevorrichtung enthalten ist, und des Ladeprofils (PFL(t)) der elektrischen Batterie bestimmt wird.

**4.** Verfahren zum optimierten Wiederaufladen nach einem der Ansprüche 1 bis 3, bei dem das Wiederaufladen (400) der elektrischen Batterie (BAT) für jedes der aufeinanderfolgenden Zeitintervalle ($\Delta T(j)$) umfasst:

das Aktivieren (420) des Wiederaufladens der elektrischen Batterie während des Zeitintervalls ($\Delta T(j)$), wenn das Zeitintervall ($\Delta T(j)$) eines der Ladezeitintervalle ($\Delta T_{chg}(j)$) ist; und
das Hemmen (430) des Wiederaufladens der elektrischen Batterie während des Zeitintervalls ($\Delta T(j)$), wenn das Zeitintervall ($\Delta T(i)$) nicht eines der Ladezeitintervalle ($\Delta T_{chg}(j)$) ist.

**5.** Verfahren zum optimierten Wiederaufladen nach Anspruch 4, bei dem das Wiederaufladen (400) der elektrischen Batterie ferner für jedes der aufeinanderfolgenden Zeitintervalle ($\Delta T(j)$) das Vergleichen des Ladewerts (TLC(j)), der dem Zeitintervall ($\Delta T(j)$) zugeordnet ist, mit einem Grenzleistungswert ($P_{lim}(j)$) umfasst;

wobei das Aktivieren (420) des Wiederaufladens der elektrischen Batterie nur dann während des Zeitintervalls ($\Delta T(j)$) stattfindet, wenn der Ladewert (TLC(j)+VE(j)), der dem Zeitintervall ($\Delta T(j)$) zugeordnet ist, kleiner als der Grenzleistungswert ($P_{lim}(j)$) ist; und

das Wiederaufladen der elektrischen Batterie während des Zeitintervalls ($\Delta T(j)$) gehemmt wird (430), wenn der Ladewert (TLC(j)), der dem Zeitintervall ($\Delta T(j)$) zugeordnet ist, größer oder gleich dem Grenzleistungswert ($P_{lim}(j)$) ist.

6. Verfahren zum optimierten Wiederaufladen nach einem der Ansprüche 1 bis 5, bei dem die verfügbare Ladezeitperiode (Td) in Abhängigkeit vom Zeitpunkt ($t_A$) des Ansteckens des Systems zum Wiederaufladen der elektrischen Batterie (BAT) an die elektrische Ladevorrichtung ($T_E$) und einer Angabe zu einem Zeitpunkt ($t_D$) der Beendigung des Wiederaufladens, die vom Benutzer des elektrischen Fahrzeugs geliefert wird, abgeleitet wird (100).

7. Verfahren zum optimierten Wiederaufladen nach einem der Ansprüche 1 bis 6, umfassend eine vorherige Überprüfung (200) der Dauer der verfügbaren Ladezeitperiode (Td) in Abhängigkeit von der notwendigen Dauer ($T_{100}$) für das vollständige Wiederaufladen der elektrischen Batterie (BAT), wobei das Wiederaufladen (400) der elektrischen Batterie während mindestens eines Ladezeitintervalls ($\Delta T_{chg}(i)$) nur dann stattfindet, wenn die Dauer der verfügbaren Ladezeitperiode (Td) größer als die notwendige Dauer ($T_{100}$) für das vollständige Wiederaufladen der elektrischen Batterie ist.

8. Verfahren zum optimierten Wiederaufladen nach einem der Ansprüche 1 bis 7, bei dem die elektrische Batterie im Wesentlichen keinen Speichereffekt aufweist.

9. Verfahren zum optimierten Wiederaufladen nach Anspruch 8, bei dem die elektrische Batterie eine Lithium-Ionen-Batterie ist.

10. Verfahren zum optimierten Wiederaufladen nach einem der Ansprüche 1 bis 9, bei dem das elektrische System ($V_E$) ein elektrisches Fahrzeug ist.

11. Computerprogramm, umfassend Befehle für das Ausführen der Schritte des Verfahrens nach einem der Ansprüche 1 bis 10, wenn es von einer Verarbeitungseinheit eines elektrischen Wiederaufladesystems ausgeführt wird.

12. Vorrichtung ($T_E$) zum optimierten Wiederaufladen der elektrischen Batterie (BAT) mindestens eines elektrischen Systems ($V_E$), das an ein elektrisches Versorgungsnetz ($E_{NET}$) angeschlossen ist, umfassend mindestens einen Anschluss ($p_1$), der geeignet ist, an das System zum Wiederaufladen der elektrischen Batterie (BAT) angeschlossen zu werden, wobei die Vorrichtung derart konfiguriert ist, dass sie die Schritte des Verfahrens nach einem der Ansprüche 1 bis 10 nach dem Anstecken des Systems zum Wiederaufladen der elektrischen Batterie (BAT) an den Anschluss der Vorrichtung zum optimierten Wiederaufladen ausführt.

13. System ($S_E$) zum optimierten Wiederaufladen für das elektrische Wiederaufladen einer Einheit, bestehend aus mindestens einem elektrischen System ($V_E$), umfassend eine elektrische Batterie (BAT), wobei das System zum optimierten Wiederaufladen ein elektrisches Versorgungsnetz ($E_{NET}$) und mindestens eine elektrische Wiederaufladevorrichtung ($T_E$) nach Anspruch 12, die an das elektrische Versorgungsnetz angeschlossen ist, umfasst.

14. System ($S_E$) zum optimierten Wiederaufladen nach Anspruch 13, ferner umfassend ein Ferninformatiksystem, das an die elektrische Wiederaufladevorrichtung angeschlossen ist, und umfassend eine Verarbeitungseinheit, die geeignet ist, die Schritte des Verfahrens nach einem der Ansprüche 1 bis 10 auszuführen.

**Claims**

1. Method for the optimized recharging of the electric battery (BAT) of at least one electric system ($V_E$) by an electric recharging device ($T_E$), wherein the electric battery (BAT) is recharged (400) during at least one charging time interval ($\Delta T_{chg}(i)$) which is part of an available charging time period (Td) initiated by connection of the electric battery recharging system to the electric recharging device, determined (300) as a function of a load curve (TLC) associated with said electric recharging device,

wherein the determination (300) of the charging time interval ($\Delta T_{chg}(i)$) comprises

sampling (310) the load curve (TLC) over the available charging time period (Td) in order to obtain a set of load curve power values ($\{TLC(i)\}_{1 \leq i \leq n}$) associated with consecutive time intervals ($\Delta T(i)$), and

sorting (320), in ascending order, the load curve power values ($\{TLC(i)\}_{1 \leq i \leq n}$) in order to obtain a set of sorted load curve power values ($\{TTC(i)\}_{1 \leq i \leq n}$) respectively associated with one of said time intervals;

the electric battery (BAT) being recharged (400) during at least one charging time interval ($\Delta T_{chg}(i)$) corresponding to a time interval associated with the first value ($TTC(1)$) of the sorted load curve power values.

2. Optimized recharging method according to claim 1, wherein the electric battery (BAT) is recharged during K charging time intervals ($\{\Delta T_{chg}(i)\}_{1 \leq i \leq K}$) selected (330) from among the time intervals ($\Delta T(i)$) associated with the first values of the sorted load curve power values, K being an integer greater than or equal to one, dependent on the level of electrical energy ($E_{in}$) contained in the electric battery when the electric battery recharging system is connected to the electric recharging device.

3. Optimized recharging method according to claim 2, wherein the number K is determined based on the level of electrical energy ($E_{in}$) contained in the electric battery when the electric battery is connected to the electric recharging device, and on the charge profile ($PFL(t)$) of said electric battery.

4. Optimized recharging method according to one of claims 1 to 3, wherein the recharging (400) of the electric battery (BAT) comprises, for each of the consecutive time intervals ($\Delta T(j)$):

enabling (420) the recharging of the electric battery during the time interval ($\Delta T(j)$) if said time interval ($\Delta T(j)$) is one of the charging time intervals ($\Delta T_{chg}(j)$), and

disabling (430) the recharging of the electric battery during the time interval ($\Delta T(j)$) if said time interval ($\Delta T(i)$) is not one of the charging time intervals ($\Delta T_{chg}(j)$).

5. Optimized recharging method according to claim 4, wherein the recharging (400) of the electric battery further comprises, for each of the consecutive time intervals ($\Delta T(j)$), comparing the load value ($TLC(j)$) associated with said time interval ($\Delta T(j)$) to a limit capacity value ($P_{lim}(j)$);

enabling (420) the recharging of the electric battery during the time interval ($\Delta T(j)$) only if the load value ($TLC(j)+V_E(j)$) associated with said time interval ($\Delta T(j)$) is less than the limit capacity value ($P_{lim}(j)$), and

disabling (430) the recharging of the electric battery during the time interval ($\Delta T(j)$) if the load value ($TLC(j)$) associated with said time interval ($\Delta T(j)$) is greater than or equal to the limit capacity value ($P_{lim}(j)$).

6. Optimized recharging method according to one of claims 1 to 5, wherein the available charging time period (Td) is determined (100) from the moment ($t_A$) when the electric battery (BAT) recharging system is connected to the electric recharging device ($T_E$) and from an indication concerning a charging end time ($t_D$) provided by the user of the electric vehicle.

7. Optimized recharging method according to one of claims 1 to 6, comprising a prior verification (200) of the duration of the available charging time period (Td) as a function of the length of time ($T_{100}$) necessary for fully recharging the electric battery (BAT), with the recharging (400) of the electric battery during at least one charging time interval ($\Delta T_{chg}(i)$) occurring only if the duration of the available charging time period (Td) is greater than the length of time ($T_{100}$) necessary for fully recharging the electric battery.

8. Optimized recharging method according to one of claims 1 to 7, wherein the electric battery has substantially no memory effect.

9. Optimized recharging method according to claim 8, wherein the electric battery is a Lithium-Ion battery.

10. Optimized recharging method according to one of claims 1 to 9, wherein the electric system ($V_E$) is an electric vehicle.

11. Computer program comprising instructions for implementing the steps of the method according to one of claims 1 to 10 when it is executed by a processing unit of an electric recharging system.

12. Optimized recharging device ($T_E$) for recharging the electric battery (BAT) of at least one electric system ($V_E$), connected to an electrical grid ($E_{NET}$) and comprising at least one connection port ($p_1$) suitable for connection to the electric battery (BAT) recharging system, the device being configured to implement the steps of the method according to one of claims 1 to 10 after the electric battery (BAT) recharging system is connected to the connection port of the optimized recharging device.

**13.** Optimized recharging system ($S_E$) for recharging an assembly composed of at least one electric system ($V_E$) comprising an electric battery (BAT), the optimized recharging system comprising an electrical grid ($E_{NET}$) and at least one electric recharging device ($T_E$) according to claim 12, connected to said electrical grid.

**14.** Optimized recharging system ($S_E$) according to claim 13, further comprising a remote computer system, connected to the electric recharging device and comprising a processing unit suitable for carrying out the steps of the method according to one of claims 1 to 10.

FIG. 1

**FIG. 2**

200

$$E_{in}, PFL\,(t) \longrightarrow T_X$$ 210

$$PFL\,(t) \longrightarrow T_{comp}$$ 220

$$T_{100} = T_{comp} - T_X$$ 230

240

$$T_{100} < Td\,?$$ → RECHRG OPT

$$P(t) = PFL\,(T_X + t)$$

## FIG. 3

FIG. 4

**FIG. 5**

EP 2 753 491 B1